# FASCICULE DE BREVET EUROPEEN

(11) **EP 3 132 403 B1**
(45) Date de publication et mention de la délivrance du brevet: **24.10.2018**
(21) Numéro de dépôt: 15713951.0
(22) Date de dépôt: 10.04.2015
(51) Int. Cl.: G06K 7/08, G06Q 20/40, G06Q 20/34, G06Q 20/42, G07F 7/10

(54) **DISPOSITIF DE TRAITEMENT DE DONNÉES EN PROVENANCE DE CARTE À MÉMOIRE SANS CONTACT, MÉTHODE ET PROGRAMME D'ORDINATEUR CORRESPONDANT**
VORRICHTUNG ZUR VERARBEITUNG VON DATEN AUS EINER KONTAKTLOSEN CHIPKARTE, VERFAHREN UND ENTSPRECHENDES COMPUTERPROGRAMM
DEVICE FOR PROCESSING DATA FROM A CONTACTLESS SMART CARD, METHOD AND CORRESPONDING COMPUTER PROGRAM

(30) Priorité: 18.04.2014 FR 1453571
(43) Date de publication de la demande: 22.02.2017
(73) Titulaire: Ingenico Group, 75015 Paris (FR)
(72) Inventeur: NACCACHE, David, F-75018 Paris (FR); DABBOUS, Nora, F-92150 Suresnes (FR)
(74) Mandataire: Vidon Brevets & Stratégie
(86) Numéro de dépôt international: PCT/EP2015/057844
(87) Numéro de publication internationale: WO 2015/158621

(56) Documents cités:
- WO-A1-2009/038446
- CN-U- 203 165 098
- US-A1- 2011 047 036
- US-B2- 8 151 335

## Description

### 1. Domaine de l'invention

Le domaine de l'invention est celui du traitement de données sans contact et plus particulièrement des terminaux pouvant lire des cartes sans contact afin de réaliser des opérations transactionnelles sécurisées.

### 2. Art antérieur

Il existe à ce jour des terminaux de communication, par exemple des ordinateurs ou des tablettes, présentant des moyens de lecture de carte sans contact. Pour les terminaux qui ne sont pas dotés de tels moyens de lecture, il existe des modules externes - par exemple des clés USB-NFC - qui, une fois connectés au terminal, permettent de pallier ce manque et réaliser des opérations de lecture de carte sans contact.

Une application courante de la lecture de carte sans contact est la réalisation d'une transaction sécurisée, par exemple une opération de paiement. Une séquence classique de paiement sans contact, mise en oeuvre à l'aide d'un terminal de paiement, se déroule ainsi :
- l'utilisateur présente sa carte à mémoire compatible contre le lecteur sans contact intégré au terminal de paiement, ou contre un lecteur sans contact externe connecté au terminal de paiement ;
- le logiciel embarqué dans le terminal de paiement met en oeuvre les étapes nécessaires à la réalisation de la transaction. Ces étapes incluent par exemple une demande de saisie du code d'identification personnel de l'utilisateur, code associé à sa carte sans contact (par exemple code PIN).
- Si nécessaire, l'utilisateur saisit son code d'identification personnel d'identification et la transaction peut être finalisée (par un calcul d'un certificat de transaction issu d'un dialogue entre le terminal de paiement et la carte sans contact).

Différents moyens peuvent être mis en oeuvre pour permettre la saisie de ce code lorsque celui-ci doit être saisi sur le terminal de paiement (qui comprend en règle générale de nombreux dispositifs complémentaire de sécurisation). Des moyens existent également pour permettre à l'utilisateur d'éviter d'avoir à saisir ce code directement sur le terminal de paiement. Ainsi, les documents US 2011/047036 et US 8151335 décrivent tous deux un dispositif spécifique personnel à l'utilisateur, qui peut être utilisé pour réaliser la saisie du code personnel d'identification dans le cadre d'une transaction mise en oeuvre par la suite par un terminal de paiement. La sécurisation de la saisie est ainsi renforcée, dans la mesure où elle est effectuée sur un dispositif personnel de l'utilisateur et non plus sur un terminal de paiement, qui est par nature un terminal « public » dont le fonctionnement a pu être altéré par des personnes malveillantes. En revanche, lorsque l'on souhaite implémenter un paiement sans contact par l'intermédiaire d'un terminal de communication classique (de type tablette ou ordinateur par exemple), les solutions sont limitées. Une première solution simple consiste à permettre à l'utilisateur de saisir un code confidentiel au clavier (de l'ordinateur, de la tablette). Du point de vue de la sécurisation des données, cette solution présente des inconvénients car les données saisies au clavier sont susceptibles d'être enregistrées par un logiciel de type keylogger (enregistreur de touches). Un keylogger est un logiciel d'espionnage souvent utilisé à des fins malveillantes. Il a généralement été installé sur un terminal à l'insu de son utilisateur, par exemple à l'ouverture d'une pièce jointe d'apparence anodine attachée à un email reçu par l'utilisateur. Une fois en place, ce logiciel permet d'intercepter et de transmettre à un tiers les séquences de touches frappées au clavier par l'utilisateur, sans que ce dernier en ait conscience. Les dispositifs de cryptage éventuellement en place pour protéger les informations confidentielles saisies sont inefficaces, dans la mesure où le keylogger collecte l'information à la source.

Pour se prémunir de ce défaut de sécurisation introduit par les keyloggers, une solution alternative est de demander à l'utilisateur de composer son code confidentiel sur un clavier visuel affiché à l'écran, à l'aide de la souris ou de tout autre dispositif de pointage. La position de ce clavier visuel ainsi que la disposition des touches qui le composent sont généralement générées aléatoirement à chaque utilisation, afin d'éviter qu'un dispositif malveillant de type capture de la position de la souris ne puisse permettre à un attaquant de déterminer le code confidentiel saisi. Cette solution n'est néanmoins pas complètement fiable, dans la mesure où une autre catégorie de logiciels espion est à même de transmettre régulièrement et à l'insu de l'utilisateur des copies d'écran de son terminal.

Ces moyens de saisie du code (clavier physique, clavier virtuel) étant gérés par le système d'exploitation du terminal, ils sont donc par nature exposés à des attaques potentielles visant à intercepter des données confidentielles par le biais de programmes malveillants installés à l'insu de l'utilisateur ou par l'exploitation de failles de sécurité existantes sur les logiciels installés. Or, pour réaliser une transaction de paiement entièrement sécurisée sur un terminal de communication à partir d'une carte sans contact, il est absolument indispensable de garantir l'intégrité de la transaction et donc l'absence de possibilité de vol des données saisies par l'utilisateur. Il existe donc un besoin de proposer une solution permettant d'assurer une meilleure sécurisation des transactions, notamment lors de la saisie de données confidentielles par un utilisateur dans le cadre de l'utilisation d'une carte à mémoire sans contact.

### 3. Résumé de l'invention

L'objet de l'invention est un dispositif permettant de réaliser la lecture de carte sans contact - par exemple dans le cadre d'une opération de paiement - tout en isolant les étapes d'acquisition et de restitution d'informations inhérentes à cette transaction afin de les rendre inaccessibles au système d'exploitation du terminal, de sorte qu'un programme malveillant présent sur le terminal ne puisse pas accéder aux informations confidentielles saisies par l'utilisateur lors de son opération de paiement.

Selon l'invention, un tel dispositif de lecture de carte sans contact comprend :
- des moyens d'acquisition de données d'entrée en provenance d'un périphérique de saisie ;
- des moyens de traitement d'au moins une séquence d'une transaction initialisée à partir de données issues d'une carte sans contact ;
- des moyens de sélection d'un mode de fonctionnement, comprenant au moins deux états :
   - un état, dit état d'inactivation, dans lequel lesdits moyens de traitement et ledit au moins un lecteur de carte à mémoire sont inactifs ;
   - un état, dit état d'activation, dans lequel lesdits moyens de traitement sont actifs et dans lequel des données d'entrées saisies par l'intermédiaire dudit périphérique de saisie sont contrôlées par lesdits moyens de traitement.

Ainsi, lorsque des données doivent être échangées lors de la réalisation d'une transaction, les moyens de traitement sont à même d'éviter que les données saisies sur le périphérique de saisie soient interceptées par un module logiciel malveillant. En effet, dans l'état d'activation du dispositif, l'acquisition et le traitement des données saisies sont effectués directement par le dispositif. Ces opérations étant exécutées hors du périmètre d'action du système d'exploitation, elles ne peuvent donc pas faire l'objet de manipulations ou d'altérations de la part de programmes malveillants potentiellement présents sur le terminal.

Selon une caractéristique particulière, ledit dispositif comprend des moyens de restitution de données de sortie en provenance desdits moyens de traitement.

Ainsi, lorsque des données doivent être échangées lors de la réalisation d'une transaction, les moyens de traitement sont à même d'éviter que les données restituées à destination d'un périphérique de sortie soient interceptées, manipulées ou altérées par un module logiciel malveillant. En effet, dans l'état d'activation du dispositif, les données restituées ne seront visibles que par le seul utilisateur ayant physiquement accès audit périphérique de sortie.

Selon une caractéristique particulière, ledit moyen de sélection du mode de fonctionnement se présente sous la forme d'un commutateur.

Ainsi, l'utilisateur a la possibilité de visualiser immédiatement le mode de fonctionnement dans lequel le dispositif se trouve, et de sélectionner simplement un autre mode de fonctionnement.

Selon une caractéristique particulière, ledit moyen de sélection du mode de fonctionnement se présente sous la forme d'une cellule de détection d'un événement externe au dispositif.

Ainsi, le dispositif peut être activé ou désactivé sans interaction physique de l'utilisateur avec ledit dispositif. Les contraintes d'usure mécanique et d'encombrement du dispositif peuvent ainsi être diminuées.

Selon une caractéristique particulière, lesdits moyens de traitement se présentent sous la forme d'un processeur de sécurisation de transactions financières.

Ainsi, le dispositif est à même d'être utilisé pour la sécurisation d'une opération de paiement.

Selon une caractéristique particulière, lesdits moyens d'acquisition de données d'entrée en provenance d'un périphérique de saisie résultent de la mise en oeuvre préalable d'un appairage bluetooth entre ledit dispositif et ledit périphérique de saisie.

Ainsi, l'acquisition des données d'entrées par le dispositif peut être effectuée sans nécessité de liaison filaire entre ledit dispositif et le périphérique de saisie.

Selon une caractéristique particulière, lesdits moyens d'acquisition de données se présentent sous la forme d'un clavier intégré au dispositif.

Ainsi la saisie des données peut être effectuée directement au sein du dispositif, ce qui permet de l'utiliser conjointement avec des terminaux de communication ne disposant pas de périphérique de saisie indépendant.

Selon un autre aspect, la technique concerne aussi un procédé de traitement de données en provenance de carte à mémoire sans contact. Un tel procédé comprend :
- une étape de réception, par le dispositif de sécurisation, d'une donnée d'activation ;
- une étape de routage, par le dispositif de sécurisation, d'au moins un flux de données issu d'un dispositif de saisie dudit terminal de communication, vers un espace mémoire de dérivation spécifique dudit dispositif de sécurisation ;
- une étape d'activation d'un mécanisme d'avertissement d'un utilisateur du dispositif de communication, délivrant une information représentative d'un début de transaction ;
- une étape d'obtention d'au moins une donnée issue d'une carte à mémoire sans contact ;
- une étape d'exécution d'une transaction, comprenant une étape d'obtention de données d'entrée à partir dudit espace mémoire de dérivation spécifique.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 2. Liste des figures

D'autres caractéristiques et avantages de la technique apparaîtront plus clairement à la lecture de la description suivante de plusieurs modes de réalisation, donnés à titre de simples exemples illustratifs et non limitatifs, et des dessins annexés, parmi lesquels:
- la figure 1 présente la structure d'un dispositif de lecture d'une carte sans contact selon un premier mode de réalisation ;
- la figure 2 présente la structure d'un dispositif de lecture d'une carte sans contact selon un deuxième mode de réalisation ;
- la figure 3 présente la structure d'un dispositif de lecture d'une carte sans contact selon un troisième mode de réalisation ;
- la figure 4 illustre les principales étapes du procédé de lecture d'une carte sans contact tel que mis en oeuvre par le dispositif décrit.
- la figure 5 illustre un dispositif de sécurisation selon la technique proposée.

### 5. Description d'un mode de réalisation de La technique

### 5.1 Principe général

Comme exposé préalablement, la technique proposée permet une sécurisation de la phase de paiement à partir d'un terminal de communication comprenant des moyens de lecture de données sans contact. Ces données sont contenues sur une carte à mémoire disposant d'une interface de lecture sans contact. La technique concerne les terminaux de communication comportant des moyens de communication sans contact, et plus particulièrement des terminaux pouvant lire des cartes sans contact. La technique proposée se rapporte à un dispositif permettant de rendre inaccessibles, au système d'exploitation du terminal, certains traitements nécessaires à la réalisation d'une transaction (ces traitements font intervenir notamment la saisie d'informations confidentielles de la part de l'utilisateur). Par la suite, ce dispositif est appelé dispositif de sécurisation transactionnel.

Ceci est rendu possible en intégrant, au dispositif de sécurisation transactionnel, des moyens d'acquisition de données, ainsi que des moyens de traitement à même de traiter ces données sans avoir recours au système d'exploitation du terminal avec lequel ce dispositif de sécurisation transactionnel est utilisé. Le dispositif de sécurisation transactionnel comprend par ailleurs un moyen de sélection permettant à l'utilisateur de choisir le mode de fonctionnement souhaité. Ce moyen de sélection peut être physique ou logiciel.

Dans un premier mode de fonctionnement, dit état d'inactivation, le lecteur de carte à mémoire sans contact est inactivé. Dans cet état, les données en provenance des périphériques de saisies ne sont pas contrôlées par le dispositif de sécurisation transactionnel qui les transmet sans modification pour un traitement par le terminal. Les données saisies sont donc gérées au niveau du système d'exploitation du terminal, de la même manière que si ledit dispositif de sécurisation transactionnel n'était pas présent.

Dans un deuxième mode de fonctionnement, dit état d'activation, le lecteur de carte à mémoire est activé. La présentation d'une carte à mémoire sans contact à proximité du lecteur sans contact est requise dans le cadre de la réalisation d'une transaction. Dans cet état, les données en provenance d'au moins un périphérique de saisie sont interceptées par le dispositif de sécurisation transactionnel et ne sont pas transmises au système d'exploitation du terminal de communication. Les moyens de traitement intégrés au sein dudit dispositif de sécurisation transactionnel sont alors mis en oeuvre pour contrôler toute donnée entrante en provenance du périphérique de saisie contrôlé.

Ainsi la sécurisation de la transaction est accrue, les échanges de données entre l'utilisateur et le moyen de traitement intégré au dispositif de sécurisation transactionnel ne pouvant plus être interceptés par des modules logiciels malveillants installés à l'insu de l'utilisateur et ayant accès au système d'exploitation de son terminal.

Par la suite, on présente trois modes de réalisation d'un tel dispositif de sécurisation transactionnel selon la technique proposée. Il est clair cependant que la technique proposée ne se limite pas à ces modes de réalisation particuliers, mais peut également être mise en oeuvre dans de nombreux autres modes de réalisation et plus généralement dans tous les cas où les avantages procurés par la technique proposée sont intéressants.

### 5.2 Descriptions de modes de réalisation

Une des applications possibles de la présente technique concerne les transactions bancaires à distance, et en particulier la sécurisation de la saisie du code d'identification personnel nécessaire à la validation de la transaction par l'utilisateur, après utilisation d'un moyen de paiement sans contact, tel qu'une carte bancaire de paiement sans contact ou un téléphone portable doté d'une technologie de paiement sans contact.

Lorsqu'un utilisateur souhaite effectuer une transaction à distance avec une carte bancaire, par exemple via Internet, sur un site marchand, celui-ci requiert des informations d'identification de la carte bancaire. Ces informations sont requises de manière sécurisée, de sorte qu'elles ne puissent pas être utilisées par une personne malveillante. Cette sécurité est notamment apportée par les systèmes de paiement sécurisé via des connexions sécurisées, sous le contrôle des organismes bancaires.

Classiquement, les informations requises doivent être saisies par l'utilisateur, et sont celles figurant sur la carte bancaire en question, à savoir le numéro d'identification bancaire de seize chiffres, la date d'expiration de la carte et un numéro supplémentaire de sécurité, appelé cryptogramme, qui figure généralement au dos de la carte.

La saisie de ces informations est fastidieuse compte tenu de la longueur du numéro d'identification. Aussi des solutions de paiements sans contact pour effectuer une transaction à distance sont développées et promues.

Le paiement sans contact est déjà utilisé pour des transactions physiques classiques, chez les commerçants équipés de terminaux électroniques de paiement compatibles. Pour effectuer son achat, le client appose simplement sa carte à mémoire sans contact sur le terminal de paiement, et la transaction est réalisée sans autre action requise de sa part pour des montants relativement faibles. Pour des montants plus importants, la saisie d'un code d'identification personnel reste requise.

Appliqué au paiement à distance, par exemple via Internet, le paiement sans contact permet de simplifier la transaction en évitant à l'utilisateur d'avoir à saisir les numéros d'identification bancaire, la date d'expiration et le cryptogramme de sa carte à mémoire. L'opération de paiement peut ainsi être effectuée plus rapidement, et le risque d'erreur de saisie est minimisé. Pour accroître la sécurisation de la transaction, il peut être demandé à l'utilisateur de saisir un code d'identification personnel en plus d'apposer sa carte à mémoire sans contact sur le lecteur sans contact de son terminal.

Tout dispositif de saisie d'information géré par le système d'exploitation du terminal présente néanmoins un risque d'interception comme explicité préalablement.

La présente technique se rapporte à un dispositif de sécurisation transactionnel comprenant un module de lecture de carte sans contact permettant à un utilisateur de réaliser un paiement à distance sans contact tout en assurant la sécurisation des informations saisies par l'utilisateur et restituées à l'utilisateur en les rendant inaccessibles au système d'exploitation du terminal, et donc aux logiciels malveillants potentiellement présents sur ce terminal.

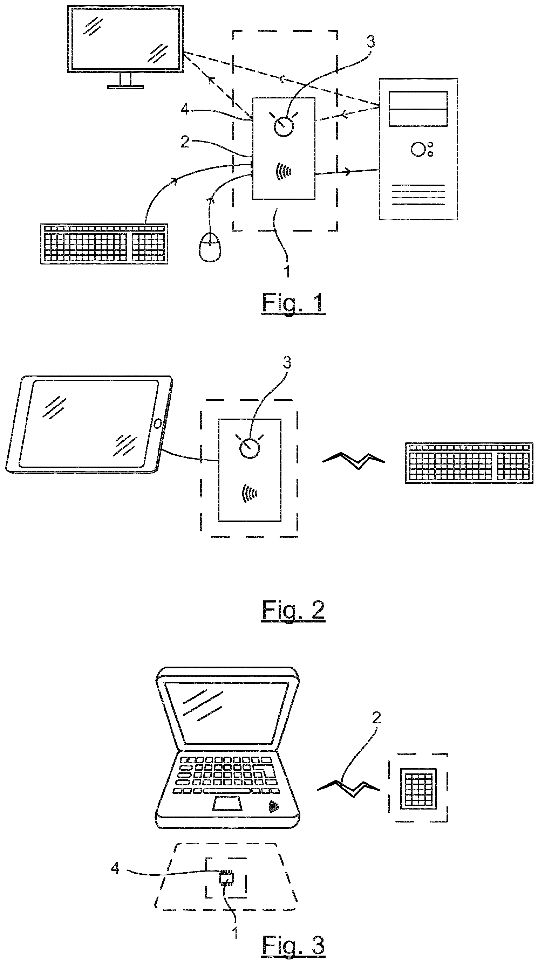

Selon un premier mode de réalisation, illustré en figure 1, le dispositif de sécurisation transactionnel (1) est utilisé conjointement avec un terminal de communication de type ordinateur de bureau, composé d'une unité centrale, d'un écran et de périphériques de saisie type clavier ou souris. Le dispositif de sécurisation transactionnel (1) est connecté à l'unité centrale par exemple via une interface, par exemple de type USB (de l'anglais Universal Serial Bus). Le dispositif de sécurisation transactionnel (1) comprend des moyens d'acquisition de données d'entrée (2), par exemple des ports USB ou PS/2 (de l'anglais Personal System/2) auxquels sont raccordés des périphériques de saisie type clavier ou souris. Le dispositif de sécurisation transactionnel (1) comprend également un moyen de sélection (3), par exemple un bouton ou un commutateur, permettant de sélectionner son mode de fonctionnement.

Selon une variante, ce moyen de sélection (3) n'est pas physiquement accessible à l'utilisateur sur le dispositif de sécurisation transactionnel (1), mais peut être constitué par une cellule de détection interne au dispositif de sécurisation transactionnel (1), cellule à même de détecter un événement externe de basculement d'un état à un autre, par exemple la saisie d'une combinaison de touches particulière sur un périphérique de saisie, la réception d'une requête de déclenchement d'une transaction de paiement (en provenance d'un fournisseur de services de paiement par exemple).

Dans un premier mode de fonctionnement, dit état d'inactivation, le lecteur de carte à mémoire sans contact du dispositif de sécurisation transactionnel (1) est inactivé. Dans cet état, les données en provenance des périphériques de saisies ne sont pas contrôlées par le dispositif de sécurisation transactionnel (1) qui les transmet sans modification à l'unité centrale, et donc au système d'exploitation du terminal. Les données saisies sont donc gérées au niveau du système d'exploitation du terminal, de la même manière que si le dispositif de sécurisation transactionnel (1) n'était pas présent.

Dans un deuxième mode de fonctionnement, dit état d'activation, le lecteur de carte à mémoire du dispositif de sécurisation transactionnel (1) est actif. La présentation d'une carte à mémoire sans contact à proximité du lecteur sans contact est requise pour la réalisation d'une transaction. Dans cet état, les données en provenance des périphériques de saisies sont interceptées par le dispositif de sécurisation transactionnel (1) et ne sont pas transmises au système d'exploitation du terminal de communication. Les moyens de traitement (non représentés) intégrés au sein du dispositif de sécurisation transactionnel (1) sont alors mis en oeuvre pour contrôler toute donnée entrante en provenance des périphériques de saisie, comme la saisie d'un code d'identification personnelle par exemple. Dans ce deuxième mode de fonctionnement, les données saisies ne sont pas transmises au système d'exploitation. Les données saisies sont utilisées uniquement pour exécuter la transaction.

Selon une variante de réalisation, le dispositif de sécurisation transactionnel (1) comprend en outre des moyens de restitution de données de sortie (4), par exemple des connecteurs VGA (de l'anglais Video Graphics Array) ou des ports HDMI (de l'anglais High Definition Multimedia Interface) ou un port USB auxquels sont raccordés des périphériques de sortie, un écran par exemple. Dans l'état d'activation du dispositif de sécurisation transactionnel (1), les moyens de traitement (non représentés) intégrés au sein dudit dispositif sont alors mis en oeuvre pour générer toute donnée de sortie à destination du périphérique de sortie, comme l'affichage d'un clavier visuel par exemple, qui ne sera alors visible que pour le seul utilisateur du terminal dans la mesure où cet affichage n'est pas géré par le système d'exploitation du terminal et échappe donc à toute tentative d'interception par un logiciel malveillant.

Selon un deuxième mode de réalisation, illustré en figure 2, le dispositif de sécurisation transactionnel (1) est utilisé conjointement avec un terminal de communication mobile, de type tablette ou téléphone portable.

Le dispositif de sécurisation transactionnel (1) est connecté à ce terminal par exemple à l'aide d'un câble USB.

Le dispositif de sécurisation transactionnel (1) comprend, comme pour le mode de réalisation précédent des moyens d'acquisition de données d'entrée (2) en provenance d'un périphérique de saisie, des moyens de traitements (non représentés) d'au moins une séquence d'une transaction initialisée à partir de données issues d'une carte sans contact, des moyens de sélection (3) d'un mode de fonctionnement comprenant au moins deux états.

Cependant, les moyens d'acquisition de données d'entrées (2) sont cette fois mis en oeuvre via une technologie de communication sans fil - par exemple la technologie Bluetooth. Selon ce deuxième mode de réalisation, on peut prévoir que le dispositif de sécurisation transactionnel (1) soit à même d'être appairé en bluetooth aux périphériques d'entrée dans une phase d'initialisation préalable dudit dispositif. Selon une variante, les moyens d'acquisition de données d'entrées (2) sont intégrés au dispositif de sécurisation transactionnel (1). Dans cette variante, le dispositif de sécurisation transactionnel (1) comprend un clavier de type PINPAD.

Selon un troisième mode de réalisation, illustré en figure 3, le dispositif de sécurisation transactionnel (1) est tout ou en partie intégré au terminal de communication (intégré sur une carte mère d'un ordinateur personnel ou sur une carte mère d'une tablette ou d'un téléphone intelligent par exemple).

Le dispositif de sécurisation transactionnel (1) comprend, comme pour le mode de réalisation précédent des moyens d'acquisition de données d'entrée (2) en provenance d'un périphérique de saisie, des moyens de traitements (non représentés) d'au moins une séquence d'une transaction avec des données issues d'une carte sans contact, des moyens de sélection (3) d'un mode de fonctionnement comprenant au moins deux états.

Dans ce mode de réalisation, les moyens d'acquisition (2) peuvent se présenter sous la forme d'un clavier autonome externe au terminal de communication, tandis que les moyens de traitement (non représentés) sont intégrés au terminal de communication, sous la forme d'un processeur sécurisé dédié et d'un espace mémoire dédié par exemple. En mode d'activation du dispositif de sécurisation transactionnel (1), c'est ce processeur qui prend le relais sur le système d'exploitation afin d'intercepter et de contrôler les données entrantes transmises par le clavier autonome, et de restituer les données de sortie sur l'affichage du terminal de communication.

Selon un quatrième mode de réalisation, le dispositif de sécurisation transactionnel (1) est intégré au terminal de communication (intégré sur une carte mère d'un ordinateur personnel ou sur une carte mère d'une tablette par exemple). Cette intégration se traduit en outre par la mise en oeuvre d'au moins un processeur de sécurisation complémentaire, intégré lui aussi au terminal de communication. Un tel processeur peut par exemple être un IPT (« Identity Protection Technology™ d'Intel™). Dans ce mode de réalisation particulier, le dispositif de sécurisation transactionnel (1) comprend une interface de commande, par l'intermédiaire de commandes particulières, du processeur de sécurisation complémentaire (PSC). Dans ce mode de réalisation, c'est le processeur de sécurisation complémentaire qui est en charge de l'interception des données saisies par l'utilisateur et de l'affichage des données sécurisées sur le dispositif d'affichage. Dans ce mode de réalisation, le processeur de sécurisation complémentaire (PSC) dispose également d'une technologie de gestion des entrées/sorties par chiffrement. Sur réception de la commande en provenance du dispositif de sécurisation transactionnel, le processeur de sécurisation complémentaire (PSC) affiche une fenêtre d'entrée sécurisée permettant à l'utilisateur de saisir des données au moyen de clics de souris au lieu de frappes réalisées au clavier. Lorsque l'utilisateur a saisi les informations requises, le processeur de sécurisation complémentaire (PSC) transmet, sous une forme chiffrée, au dispositif de sécurisation transactionnel, le résultat de cette saisie. Le dispositif de sécurisation transactionnel déchiffre les informations transmises à l'aide de sa clé privée pour vérifier la validité de la saisie réalisée par l'utilisateur.

Quel que soit le mode de réalisation, la technique requiert une exécution de la transaction au sein du dispositif de sécurisation. Celui-ci est en charge de la construction de la transaction et notamment de la création d'un tunnel point à point avec un serveur transactionnel distant appartenant à un fournisseur de services de paiement.

À ce titre, le dispositif de sécurisation comprend donc, au sein d'une mémoire dédiée sécurisée, du matériel cryptographique utilisé pour créer le tunnel sécurisé avec le serveur. Le matériel cryptographique peut être inséré dans le dispositif de sécurisation au moment de la fabrication de celui-ci. Le matériel cryptographique peut également être inséré dans une phase ultérieure d'initialisation.

### 5.3 Procédé de mise en oeuvre

On décrit ci-après un procédé de mise en oeuvre de la technique décrite pour exécuter une transaction de paiement à l'aide d'une carte à mémoire sans contact. Le procédé débute après que le dispositif ait reçu, de la part du terminal de communication ou de la part d'un serveur marchand avec lequel le terminal de communication est connecté, d'un montant de transaction (lorsqu'il s'agit d'une transaction de paiement) et d'un bénéficiaire de transaction (par exemple un compte ou un identifiant bancaire). Un tel procédé comprend :
- une étape de réception (100), par le dispositif de sécurisation, d'une donnée d'activation (DA) ; cette donnée d'activation peut être reçue par l'intermédiaire d'une requête en provenance d'un serveur d'un fournisseur de services de paiement, ou par l'intermédiaire d'un bouton (switch) sur le dispositif de sécurisation lui-même ou encore par l'intermédiaire d'une combinaison de touches effectuées au clavier ;
- une étape de routage (200), par le dispositif de sécurisation, d'au moins un flux de données (FLX) issu d'un dispositif de saisie dudit terminal de communication, vers un espace mémoire de dérivation spécifique (Derv) dudit dispositif de sécurisation ;
- une étape d'activation (300) d'un mécanisme d'avertissement (AVRT) d'un utilisateur du dispositif de communication, délivrant une information représentative d'un début de transaction ; une telle information peut se présenter par exemple par l'activation d'une diode lumineuse directement relié à un processeur du dispositif de sécurisation ou encore par un affichage spécifique à l'écran du terminal de communication ou encore à la combinaison de ces deux éléments ; ce mécanisme d'avertissement déclenche un « timer » définissant un temps durant lequel l'utilisateur peut présenter sa carte sans contact devant le lecteur idoine ;
- une étape d'obtention (400) d'au moins une donnée (DATAC) issue d'une carte à mémoire sans contact (CARDM) ;
- une étape d'exécution d'une transaction (500), comprenant une étape d'obtention de données d'entrée à partir dudit espace mémoire de dérivation spécifique et ladite au moins une donnée d'entrée ;

Ainsi, la méthode proposée permet de réaliser une transaction de manière sécurisée. Les données d'entrée qui sont obtenues à partir de l'espace mémoire de dérivation spécifique sont par exemple un code d'identification personnel, qui doit être saisi par l'utilisateur. Ce code d'identification personnel est requis au cours de l'exécution de la transaction.

### 5.4 Autres caractéristiques et avantages

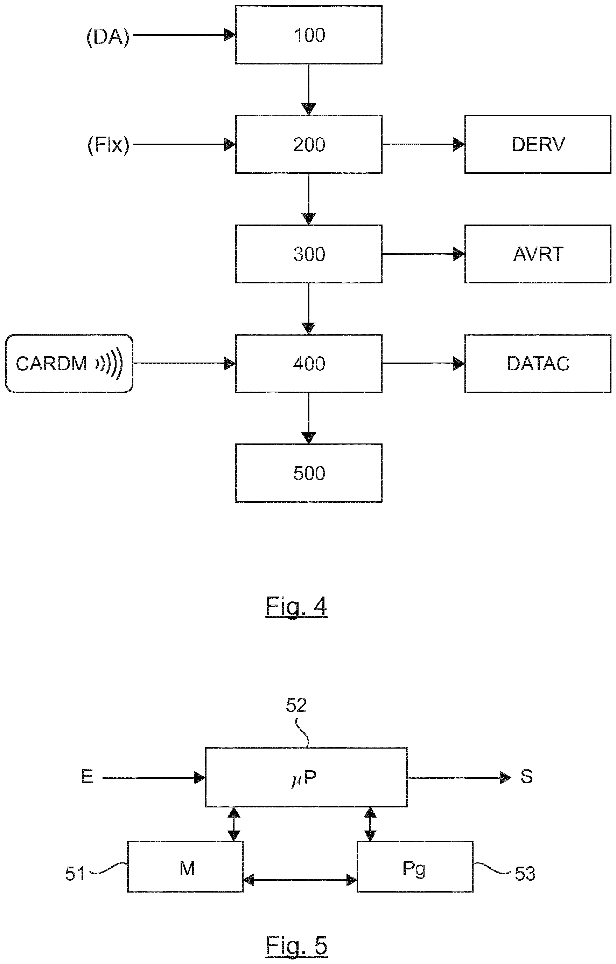

On décrit, en relation avec la figure 5, un dispositif de sécurisation de paiement comprenant des moyens permettant l'exécution du procédé décrit préalablement.

Par exemple, le dispositif de sécurisation de paiement comprend une mémoire 51 constituée d'une mémoire tampon, une unité de traitement 52, équipée par exemple d'un microprocesseur, et pilotée par le programme d'ordinateur 53, mettant en oeuvre nécessaires à la mise en oeuvre des fonctions de paiement.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée (E) par exemple des données d'activation et/ou des données représentatives d'un achat. Le microprocesseur de l'unité de traitement 52 met en oeuvre les étapes du procédé de vérification de l'authenticité, selon les instructions du programme d'ordinateur 53 pour effectuer des paiements et notifier en sortie (S) le succès ou l'échec de ces paiements.

Pour cela, le dispositif de sécurisation de paiement comprend, outre la mémoire tampon 51, des moyens de transmission/réception de données sans contact et éventuellement un processeur de chiffrement et éventuellement des moyens de communications, tels que des modules de communication réseau permettant d'établir une liaison sécurisée point à point avec un serveur d'un fournisseur de services de paiement.

Selon l'invention, un tel dispositif de sécurisation de paiement comprend en outre des moyens de routage de données de périphériques de saisie, vers une mémoire de dérivation et des moyens de lecture de cette mémoire de dérivation. Ces moyens peuvent être pilotés par le processeur de l'unité de traitement 52 en fonction du programme d'ordinateur 53 lorsque le dispositif de sécurisation est activé (soit manuellement, soit électroniquement). De manière complémentaire, un tel dispositif de sécurisation de paiement peut comprendre une antenne spécifique, intégré au boitier du dispositif de sécurisation, antenne destinée à entrer en contact avec un module de réception/transmission sans contact, par exemple présent sur une carte à mémoire.

## Revendications

1. Dispositif de sécurisation transactionnel (1) pour le traitement de données en provenance de carte à mémoire sans contact, ledit dispositif comprenant au moins un lecteur de carte à mémoire sans contact, ledit dispositif étant connecté ou intégré au moins partiellement à un terminal de communication personnel d'un utilisateur, ledit dispositif étant **caractérisé en ce qu'**il comprend :
- des moyens d'acquisition de données d'entrée (2) en provenance d'un périphérique de saisie ;
- des moyens de transmission desdites données d'entrée audit terminal de communication ;
- des moyens de traitement d'au moins une séquence d'une transaction à distance, initialisée à partir de données issues d'une carte sans contact ;
- des moyens de sélection (3) d'un mode de fonctionnement, comprenant au moins deux états :
▪ un état, dit état d'inactivation, dans lequel lesdits moyens de traitement et ledit au moins un lecteur de carte à mémoire sont inactifs, et dans lequel les données d'entrées saisies par l'intermédiaire dudit périphérique de saisie sont transmises audit terminal de communication au moyen desdits moyens de transmission ;
▪ un état, dit état d'activation, dans lequel lesdits moyens de traitement et ledit au moins un lecteur de carte à mémoire sont actifs et dans lequel des données d'entrées saisies par l'intermédiaire dudit périphérique de saisie sont contrôlés par lesdits moyens de traitement.

2. Dispositif selon la revendication 1, **caractérisé en ce qu'**il comprend en outre des moyens de restitution de données de sortie (4) en provenance desdits moyens de traitement.

3. Dispositif selon la revendication 1 ou 2 **caractérisé en ce que** les moyens de sélection (3) se présentent sous la forme d'un commutateur manipulable par l'utilisateur.

4. Dispositif selon la revendication 1 ou 2 **caractérisé en ce que** les moyens de sélection (3) se présentent sous la forme d'une cellule de détection d'un événement externe au dispositif.

5. Dispositif selon la revendication 1 **caractérisé en ce que** les moyens de traitement se présentent sous la forme d'un processeur de sécurisation de transactions financières.

6. Dispositif selon la revendication 1 **caractérisé en ce que** les moyens d'acquisition de données d'entrée (2) en provenance d'un périphérique de saisie résultent de la mise en oeuvre préalable d'un appairage bluetooth entre ledit dispositif et ledit périphérique de saisie.

7. Dispositif selon la revendication 1 **caractérisé en ce que** lesdits moyens d'acquisition de données (2) se présentent sous la forme d'un clavier intégré au dispositif.

8. Procédé de traitement de données en provenance de carte à mémoire sans contact, par un dispositif de sécurisation transactionnel selon la revendication 1, ledit dispositif de sécurisation transactionnel comprenant au moins un lecteur de carte à mémoire sans contact, ledit procédé étant **caractérisé en ce qu'**il comprend :
- une étape de réception, par le dispositif de sécurisation transactionnel, d'une donnée d'activation ;
- une étape de routage, par le dispositif de sécurisation transactionnel, en fonction de ladite donnée d'activation, d'au moins un flux de données issu d'un périphérique de saisie dudit terminal de communication, vers un espace mémoire de dérivation spécifique dudit dispositif de sécurisation transactionnel ;
- une étape d'activation d'un mécanisme d'avertissement d'un utilisateur du terminal de communication, délivrant une information représentative d'un début de transaction ;
- une étape d'obtention d'au moins une donnée issue d'une carte à mémoire sans contact ;
- une étape d'exécution d'une transaction, comprenant une étape d'obtention de données d'entrée à partir dudit espace mémoire de dérivation spécifique.

9. Procédé selon la revendication 8 **caractérisé en ce que** les données d'entrée sont un code d'identification personnel.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 8, lorsqu'il est exécuté sur un ordinateur.

## Patentansprüche

1. Verfahren zur Transaktionssicherung (1) zur Verarbeitung von Daten aus einer kontaktlosen Chipkarte, wobei die Vorrichtung mindestens einen Leser einer kontaktlosen Chipkarte umfasst, wobei die Vorrichtung an ein Personal-Kommunikationsendgerät eines Benutzers angeschlossen oder zumindest teilweise in dieses integriert ist, wobei die Vorrichtung **dadurch gekennzeichnet ist, dass** sie umfasst:
- Mittel zur Eingangsdatenerfassung (2) von einem Eingabe-Peripheriegerät;
- Mittel zur Übertragung der Eingangsdaten an das Kommunikationsendgerät;
- Mittel zur Fernbearbeitung mindestens einer Sequenz einer Transaktion, die auf Basis von Daten, die von einer kontaktlosen Karte stammen, initialisiert wird;
- Mittel zur Auswahl (3) eines Betriebsmodus, umfassend mindestens zwei Zustände:
* einen so genannten Inaktivierungszustand, in dem die Verarbeitungsmittel und der mindestens eine Chipkartenleser inaktiv sind, und in dem die mit Hilfe des Eingabe-Peripheriegeräts eingegebenen Eingangsdaten an das Kommunikationsendgerät mit Hilfe der Übertragungsmittel übertragen werden;
* einen so genannten Aktivierungszustand, in dem die Verarbeitungsmittel und der mindestens eine Chipkartenleser aktiv sind, und in dem die mit Hilfe des Eingabe-Peripheriegeräts eingegebenen Eingangsdaten von den Verarbeitungsmitteln kontrolliert werden.

2. Vorrichtung nach Anspruch 1, **dadurch gekennzeichnet, dass** sie ferner Mittel zur Wiedergabe von Ausgangsdaten (4), die von den Verarbeitungsmitteln kommen, umfasst.

3. Vorrichtung nach Anspruch 1 oder 2, **dadurch gekennzeichnet, dass** die Auswahlmittel (3) in Form eines vom Benutzer betätigbaren Schalters vorhanden sind.

4. Vorrichtung nach Anspruch 1 oder 2, **dadurch gekennzeichnet, dass** die Auswahlmittel (3) in Form einer Zelle zur Erfassung eines Ereignisses außerhalb der Vorrichtung vorhanden sind.

5. Vorrichtung nach Anspruch 1, **dadurch gekennzeichnet, dass** die Verarbeitungsmittel in Form eines Prozessors zur Sicherung von Finanztransaktionen vorhanden sind.

6. Vorrichtung nach Anspruch 1, **dadurch gekennzeichnet, dass** sich die Erfassungsmittel von Eingangsdaten (2), die von einem Eingabeperipheriegerät stammen, aus dem vorherigen Einsatz einer Bluetooth-Einrichtung zwischen der Vorrichtung und dem Eingabeperipheriegerät ergeben.

7. Vorrichtung nach Anspruch 1, **dadurch gekennzeichnet, dass** die Datenerfassungsmittel (2) in Form einer in die Vorrichtung integrierten Tastatur vorhanden sind.

8. Verfahren zur Verarbeitung von Daten, die von einer kontaktlosen Chipkarte stammen, durch eine Vorrichtung zur Transaktionssicherung nach Anspruch 1, wobei die Vorrichtung zur Transaktionssicherung mindestens einen Leser einer kontaktlosen Chipkarte umfasst, wobei das Verfahren **dadurch gekennzeichnet ist, dass** es umfasst:
- einen Schritt des Empfangs eines Aktivierungsdatums durch die Vorrichtung zur Transaktionssicherung.
- einen Schritt des Routens mindestens eines von dem Eingabe-Peripheriegerät des Kommunikationsendgeräts kommenden Datenstroms durch die Vorrichtung zur Transaktionssicherung in Abhängigkeit vom Aktivierungsdatum zu einem spezifischen abgezweigten Speicherraum der Vorrichtung zur Transaktionssicherung;
- einen Schritt der Aktivierung eines Informationsmechanismus eines Benutzers des Kommunikationsendgeräts, der eine für einen Transaktionsbeginn repräsentative Information liefert;
- einen Schritt des Erhalts mindestens eines Datums, das von einer kontaktlosen Chipkarte stamme;
- einen Schritt der Ausführung einer Transaktion, umfassend einen Schritt des Erhalts von Eingangsdaten von dem spezifischen abgezweigten Speicherraum.

9. Verfahren nach Anspruch 8, **dadurch gekennzeichnet, dass** die Eingangsdaten ein persönlicher Identifizierungscode sind.

10. Von einem Kommunikationsnetz herunterladbares und/oder auf einem von einem Computer lesbaren Träger gespeichertes und/oder von einem Mikroprozessor ausführbares Computerprogrammprodukt, **dadurch gekennzeichnet, dass** es Programmcodeanweisungen für die Ausführung eines Verarbeitungsverfahrens nach Anspruch 8 umfasst, wenn es auf einem Computer ausgeführt wird.

## Claims

1. Transaction securing device (1) for processing data coming from a contactless memory card, said device comprising at least one contactless memory card reader, said device being connected to or integrated at least partially into a user's personal communications terminal, said device being **characterized in that** it comprises:
- means (2) for acquiring input data coming from an input peripheral;
- transmission means for transmitting said input data to said communications terminal;
- processing means for processing at least one sequence of a remote transaction initialized on the basis of data coming from a contactless card;
- selection means (3) for selecting a mode of operation comprising at least two states:
▪ a state, called an inactivation state, in which said processing means and said at least one memory card reader are inactive, and in which said pieces of input data entered through said input peripheral are transmitted to said communications terminal by means of said transmission means ;
▪ a state, called an activation state, in which said processing means and said at least one contactless memory card reader are active and in which pieces of input data entered through said input peripheral are controlled by said processing means.

2. Device according to claim 1, **characterized in that** it further comprises means (4) for rendering output data coming from said processing means.

3. Device according to claim 1 or 2 **characterized in that** the selection means (3) take the form of a switch that can be handled by the user.

4. Device according to claim 1 or 2 **characterized in that** the selection means (3) take the form of a cell for detecting an event external to the device.

5. Device according to claim 1 **characterized in that** the processing means take the form of a processor for securing financial transactions.

6. Device according to claim 1 **characterized in that** the means (2) for acquiring input data coming from an input peripheral result from the preliminary implementing of a Bluetooth pairing between said device and said input peripheral.

7. Device according to claim 1 **characterized in that** said means (2) for acquiring data take the form of a keyboard integrated into the device.

8. Method for processing data coming from a contactless memory card, by means of a transaction securing device according to claim 1, said transaction securing device comprising at least one contactless memory card reader, said method being **characterized in that** it comprises:
- a step for receiving, at the transaction securing device, a piece of activation data;
- a step for the routing, by the transaction securing device, as a function of said piece of activation data, of at least one stream of data coming from an input peripheral of said communications terminal, to a specific shunt memory space of said transaction securing device;
- a step for activating a warning mechanism for warning a user of the communications terminal, delivering a piece of information representing a start of a transaction;
- a step for obtaining at least one piece of data coming from a contactless memory card;
- a step for executing a transaction comprising a step for obtaining input data from said specific shunt memory space.

9. Method according to claim 8 **characterized in that** the pieces of input data are a personal identification code.

10. Computer program product downloadable from a communications network and/or stored on a computer-readable carrier and/or executable by a microprocessor, **characterized in that** it comprises program code instructions for executing a method of processing according to claim 8, when it is executed on a computer.
